# EUROPÄISCHE PATENTANMELDUNG

(11) **EP 4 538 204 A1**
(43) Veröffentlichungstag der Anmeldung: **16.04.2025**
(21) Anmeldenummer: 24192223.6
(22) Anmeldetag: 01.08.2024
(51) Int. Cl.: B65G 17/20, B65G 17/48, B65G 19/02

(54) **HÄNGEFÖRDERVORRICHTUNG, HÄNGEFÖRDERANLAGE MIT EINER DERARTIGEN HÄNGEFÖRDERVORRICHTUNG SOWIE FÖRDERVERFAHREN FÜR WAREN**

(30) Priorität: 12.10.2023 DE 102023210022
(71) Anmelder: Dürkopp Fördertechnik GmbH, 33719 Bielefeld (DE)
(72) Erfinder: Landermann, Frank, 33818 Leopoldshöhe (DE); Merten, Markus, 33605 Bielefeld (DE)
(74) Vertreter: Rau, Schneck & Hübner Patentanwälte Rechtsanwälte PartGmbB

(57) **Zusammenfassung**

Eine Hängefördervorrichtung umfasst eine eine Förderrichtung (3) vorgebende Förderschiene (2), mehrere in der Förderschiene (2) in Förderrichtung (3) bewegbare Hängeadapter (5), ein an der Förderschiene (2) angeordnetes Stoppelement (24) zum Stoppen der Hängeadapter (5) in der Förderschiene (2) sowie eine stromaufwärts des Stoppelements (24) angeordnete Halteeinheit (25) zum Halten mindestens eines im Bereich der Halteeinheit (25) angeordneten Hängeadapters (5).

## Beschreibung

Der Inhalt der deutschen Patentanmeldung DE 10 2023 210 022.3 wird durch Bezugnahme hierin aufgenommen.

Die Erfindung betrifft eine Hängefördervorrichtung, eine Hängeförderanlage mit einer derartigen Hängefördervorrichtung sowie eine Verfahren zum Fördern von Waren.

Eine Hängefördervorrichtung ist bekannt aus DE 10 2010 010 107 A1. Mit der Hängefördervorrichtung werden Hängeadapter entlang einer Förderschiene gefördert. An den Hängeadaptern können Fördertaschen hängen, die mit Waren beladen sind. Entlang der Hängefördervorrichtung kann es erforderlich sein, die Hängeadapter zu stoppen beispielsweise wegen einem nachfolgenden Vereinzelungsprozess oder einem Ausschleusevorgang. Dadurch, dass ein Hängeadapter in der Förderschiene gestoppt wird, fahren nachfolgende Hängeadapter in der Förderschiene auf diesen auf und werden dadurch ebenfalls gestoppt. Mit jedem zusätzlich aufgestauten Hängeadapter steigt der Staudruck auf die davor angeordneten Hängeadapter. Es besteht ein Risiko, dass die vorderen, insbesondere der vorderste, Hängeadapter beschädigt und/oder zerstört werden. Die beladenen Fördertaschen weisen entlang der Förderrichtung eine Taschendicke auf, die typischerweise größer ist als eine in Förderrichtung orientierte Breite des Hängeadapters. In Folge der Taschendicke werden die vorderen beladenen Fördertaschen beim Aufstauen nach vorne gedrückt und nach oben geschwenkt. Es besteht das Risiko, dass die geschwenkten Taschen seitlich abgleiten und aus der Reihe ausbrechen. Eine Fortsetzung der Förderung nach dem Öffnen des Stoppelements kann beeinträchtigt oder verhindert sein.

Zur Vermeidung zu großer Staudrücke ist es bekannt, entlang der Förderschiene regelmäßig Stoppelemente anzuordnen, um die maximale Anzahl aufzustauender Taschen und damit den Staudruck zu begrenzen. Eine derartige Anlage ist nachteilig, weil Speicherplatz in der Hängefördervorrichtung ungenutzt bleibt. Zudem ist der Anlageninvest aufgrund der erhöhten Anzahl der Stoppelemente erhöht.

Es ist die Aufgabe der vorliegenden Erfindung, das Aufstauen von hängend geförderten Waren unkompliziert und zuverlässig, insbesondere kollisionsfrei, zu ermöglichen.

Diese Aufgabe ist erfindungsgemäß gelöst, durch eine Hängefördervorrichtung mit den im Anspruch 1 angegebenen Merkmalen, durch eine Hängeförderanlage mit den im Anspruch 13 angegebenen Merkmalen sowie durch ein Verfahren mit den im Anspruch 14 angegebenen Merkmalen.

Der Kern der Erfindung besteht darin, dass in einer Hängefördervorrichtung stromaufwärts eines Stoppelements eine Halteeinheit angeordnet ist, mit der mindestens ein Hängeadapter im Bereich der Halteeinheit gehalten wird. Insbesondere werden mehrere Hängeadapter von der Halteeinheit gleichzeitig gehalten, insbesondere mindestens drei Hängeadapter, insbesondere mindestens fünf, insbesondere mindestens sieben, insbesondere mindestens acht und insbesondere mindestens zehn. Insbesondere werden mit der Halteeinheit höchstens fünfzig Hängeadapter gehalten. Insbesondere ist vermieden, dass nur ein, insbesondere einziger, Hängeadapter gehalten wird, auf den nachfolgende Hängeadapter auflaufen. Mit der erfindungsgemäßen Hängefördervorrichtung wird der Staudruck auf die einzelnen Hängeadapter, insbesondere die in Förderrichtung vorne angeordneten Hängeadapter, reduziert, insbesondere minimiert und insbesondere vermieden. Dadurch, dass mehrere Hängeadapter mittels der Halteeinheit gleichzeitig angehalten werden, ist deren Positionierung quasi zeitlich eingefroren. Die Halteeinheit bewirkt unmittelbar die Positionierung mehrerer Hängeadapter, wobei die gehaltenen Hängeadapter insbesondere entlang der Förderrichtung beabstandet zueinander angeordnet sind.

Die Halteeinheit ist insbesondere so ausgeführt, die Bewegung mehrerer Hängeadapter in der Förderschiene in Förderrichtung gleichzeitig anzuhalten. Die Halteeinheit hindert die Hängeadapter an einer weiteren Förderbewegung und hält die Hängeadapter in ihrer aktuellen Position. Hängeadapter, die nicht in Einfluss mit der Halteeinheit stehen, können in Förderrichtung weitergefördert werden. Das Halten eines Hängeadapters in der Halteeinheit bezeichnet das Anhalten der Bewegung des Hängeadapters in Förderrichtung.

Die Halteeinheit ist derart ausgeführt, dass die Hängeadapter in ihrer Anordnung in der Halteeinheit gehalten werden. Die Anordnung der Hängeadapter in der Halteeinheit ist insbesondere abhängig von der Dicke einer Fördertasche, die mittels eines Hängeadapters gefördert wird. Der Abstand der Hängeadapter entlang der Förderrichtung ergibt sich daraus, dass die Taschendicke der beladenen Taschen im Allgemeinen größer ist als eine Breite der Hängeadapter in Förderrichtung.

Insbesondere hängt jeweils an einem Hängeadapter eine Fördertasche. Jede Fördertasche kann mit mindestens einer Ware, insbesondere einer Einzelware, beladen werden. Vorteilhaft ist, wenn die Fördertaschen jeweils mit genau einer Einzelware beladen sind. Es ist denkbar, dass entlang des Warenstroms auch unbeladene Fördertaschen angeordnet sind. Unbeladene Fördertaschen weisen eine Taschendicke auf, die kleiner oder gleich der Breite des Hängeadapters ist.

Die Dicke der Fördertasche ist in Förderrichtung orientiert. Die Förderrichtung wird von einer Förderschiene vorgegeben, in der die Hängeadapter bewegbar angeordnet sind. Insbesondere herrscht auf die von der Halteeinheit gehaltenen Hängeadapter kein zusätzlicher Staudruck. Insbesondere der vorderste Hängeadapter, der mittels des Stoppelements gestoppt ist, ist druckentlastet. Zusätzlich zu den Hängeadaptern im Bereich der Halteeinheit sind keine oder allenfalls eine geringe Anzahl von Hängeadaptern aufgestaut, die zusätzlichen Staudruck auf den Hängeadapter am Stoppelement ausüben. Eine geringe Anzahl bedeutet, dass höchstens fünf weitere Hängeadapter auf den Hängeadapter am Stoppelement aufgestaut werden, insbesondere höchstens vier weitere, insbesondere höchstens drei weitere, insbesondere höchstens zwei weitere und insbesondere höchstens ein weiterer Hängeadapter.

Durch das Halten der Hängeadapter wird deren Positionierung im Bereich der Halteeinheit, insbesondere der Abstand der Hängeadapter in Förderrichtung festgelegt, also quasi zeitlich eingefroren.

Die Förderung der Hängeadapter in der Förderschiene erfolgt insbesondere mittels eines Antriebsmittels und einer Antriebskette, wie sie grundsätzlich aus der DE 10 2010 010 107 A1 bekannt ist. Die Fördervorrichtung wird auch als Stauförderer bezeichnet. Eine Förderung kann aber auch dadurch erfolgen, dass die Förderschiene entlang der Förderrichtung nach unten abfällt, insbesondere linear, also eine nach unten geneigte Förderschiene. Die Förderschiene kann entlang der Förderrichtung zusätzlich oder alternativ nach unten gekrümmt sein. Zusätzlich oder alternativ kann Förderung auch mit einem sogenannten Power & Free-Fördersystem erfolgen, also einem Zweischienensystem, bei dem in der oberen Schiene eine Antriebskette läuft, mit der Hängeadapter in der darunter angeordneten Schiene angetrieben werden können.

Die erfindungsgemäße Hängefördervorrichtung umfasst ein Stoppelement, mit dem die Hängeadapter in der Förderschiene gestoppt werden. Mit dem Stoppelement wird genau ein Hängeadapter aktiv gestoppt. Insbesondere wird ein Weiterfördern des Hängeadapters durch das Stoppelement verhindert. Nachfolgende Hängeadapter werden an dem gestoppten Hängeadapter aufgestaut. Insbesondere ist das Stoppelement unkompliziert ausgeführt und gewährleistet ein zuverlässiges und robustes Stoppen der Bewegung der Hängeadapter in der Förderschiene, insbesondere durch ein mechanisches Blockieren des Förderweges des Hängeadapters in der Förderschiene.

Die Halteeinheit unterscheidet sich von dem Stoppelement insbesondere dadurch, dass mit der Halteeinheit mehrere Hängeadapter gleichzeitig und unmittelbar bezüglich ihrer Position entlang der Förderschiene festgelegt werden. Mit dem Stoppelement wird nur der benachbart zu dem Stoppelement angeordnete Hängeadapter gehalten. Alle weiteren Hängeadapter stauen sich an dem gehaltenen Hängeadapter auf, werden also mittelbar gestoppt.

Ein weiterer Unterschied besteht darin, dass die Hängeadapter, die mit ein paar Tragrollen in der Förderschiene rollend angeordnet sind, mit der Halteeinheit derart gehalten werden, dass ein Pendeln der Hängeadapter um die Drehachse der Rollen verhindert ist. Insbesondere werden die Hängeadapter in einem Bereich außerhalb der Förderschiene gehalten, insbesondere mechanisch geklemmt. Ein unbeabsichtigtes Schwenken der gehaltenen Hängeadapter ist zuverlässig verhindert. Demgegenüber ist das Stoppelement insbesondere an einer Position vertikal oberhalb der Drehachse der Tragrollen des Hängeadapters an der Förderschiene angeordnet, so dass der Hängeadapter um die Drehachse der Tragrollen in der Förderschiene, insbesondere in Form eines von nachfolgenden Hängeadaptern verursachten Staudrucks unbeabsichtigt geschwenkt werden kann. Diese unbeabsichtigte Schwenkbewegung ist durch die Halteeinheit zuverlässig ausgeschlossen.

Dadurch, dass mit der Halteeinheit der Abstand mehrerer Hängeadapter gleichzeitig festgelegt werden kann, werden zusätzliche Stoppelemente zur Reduzierung des Staudrucks entbehrlich. Der Investitionsaufwand für mehrere Stoppelemente ist vermieden. Ein Verlust von Speicherplatz ist verhindert. Eine derartige Hängefördervorrichtung ist ökonomisch vorteilhaft.

Eine Hängefördervorrichtung gemäß Anspruch 2 vereinfacht das definierte Halten der Hängeadapter. Die Halteeinheit ist schaltbar, insbesondere zwischen einem Haltezustand, in dem die Hängeadapter bezüglich ihrer Position in der Förderschiene festgelegt sind, also insbesondere unbeweglich in der Förderschiene angeordnet sind, und einem Freigabezustand, in dem die Hängeadapter in der Förderschiene beweglich sind.

Eine Hängefördervorrichtung gemäß Anspruch 3 ist unkompliziert ausgeführt und gewährleistet das gleichzeitige Halten mehrerer Hängeadapter. Die Halteeinheit weist zwei Halteelemente auf, die insbesondere jeweils als Halteleisten ausgeführt sind. Vorteilhaft ist, wenn eine erste Halteleiste ortsfest an der Förderschiene angebracht ist. Die zweite Halteleiste ist insbesondere beweglich relativ zu der ersten Halteleiste ausgeführt. Insbesondere ist die zweite Halteleiste schwenkbar um eine Schwenklängsachse an der Förderschiene angeordnet. Es ist auch denkbar, dass die zweite Halteleiste in einer Richtung quer zur Förderrichtung, die insbesondere der Dickenrichtung des Hängeadapters entspricht, verlagerbar ist. Insbesondere ist die zweite Halteleiste relativ zur Förderschiene beweglich ausgeführt. Die Halteleisten sind insbesondere einander gegenüberliegend an der Förderschiene angeordnet. Die Halteleisten erstrecken sich insbesondere jeweils parallel zur Förderrichtung, insbesondere parallel zueinander. Die Halteleisten sind insbesondere jeweils unterhalb der Förderschiene angeordnet, insbesondere benachbart zu einem unteren Schlitz der Förderschiene. Die Halteleisten sind insbesondere derart an der Förderschiene angeordnet, dass sie geeignet sind, an der Unterseite aus der Förderschiene vorstehende Hängeadapter zu berühren. Die Halteleisten ermöglichen das formschlüssige und/oder kraftschlüssige Halten der Hängeadapter. Insbesondere werden die Hängeadapter bezüglich ihrer Dickenrichtung von den beiden Halteelementen geklemmt. Damit kann die jeweilige Position der Hängeadapter, insbesondere unabhängig vom Aufstauen weiterer Fördertaschen, die stromaufwärts der Halteeinheit angeordnet sind, konserviert, also festgelegt werden. Weitere Fördertaschen, die stromaufwärts der Halteeinheit angeordnet sind, üben keinen zusätzlichen Staudruck auf die Hängeadapter in der Halteeinheit aus. Die Halteleisten wirken insbesondere wie Bremsbacken, die seitlich unterhalb der Förderschiene angeordnet sind.

Insbesondere werden die Hängeadapter zwischen den Halteelementen mechanisch geklemmt, also reibschlüssig gehalten. Die Halteelemente erfüllen die Funktion von Bremsbacken.

Eine Ausführung der Halteelemente gemäß Anspruch 4 ermöglicht eine verbesserte Klemmung der Hängeadapter durch Kraftschluss.

Eine Halteeinheit gemäß Anspruch 5 vereinfacht die schaltbare Anordnung zwischen Haltezustand und Freigabezustand. Insbesondere kann das zweite Halteelement mit mindestens einem schaltbaren Stellelement zwischen einer Freigabeposition und einer Halteposition verlagert werden. In der Halteposition ist das zweite Halteelement benachbart zu dem ersten Halteelement angeordnet, so dass die dazwischen angeordneten Hängeadapter zuverlässig geklemmt, also gehalten sind. In der Freigabeposition ist das zweite Halteelement von dem ersten Halteelement weg verlagert, also beabstandet, angeordnet. In der Freigabeposition hat die Halteeinheit keine Haltefunktion. Hängeadapter können ungebremst entlang der Halteeinheit gefördert werden. Insbesondere weist die Halteeinheit mehrere, insbesondere zwei, Stellelemente auf. Dadurch ist gewährleistet, dass entlang der Längserstreckung der Halteeinheit ein ausreichender Anpressdruck für die beiden Halteelemente vorliegt. Es ist möglich, dass insbesondere bei großen Baugrößen und/oder bei kleindimensionierten Stellelementen, die insbesondere nur geringe Anpresskräfte ermöglichen, mehrere Stellelemente verwendet werden, um eine ausreichenden Anpressdruck der Halteeinheit insgesamt zu gewährleisten.

Die Stellelemente sind insbesondere lineare Stellelemente, insbesondere Pneumatikzylinder. Es ist grundsätzlich denkbar, Hydraulikzylinder, elektromotorische und/oder elektromagnetische Linearantriebe zu verwenden.

Eine Hängefördervorrichtung gemäß Anspruch 6 weist konstruktive Vorteile auf, insbesondere, weil das zweite Halteelement vorteilhaft mit dem Stellelement koppelbar ist. Verlagerbarkeit des zweiten Halteelements wird von der Kopplung mit dem Stellelement funktional entkoppelt und dadurch vereinfacht. Insbesondere ist das Verlagerungselement beweglich an der Förderschiene angebracht. Das Halteelement selbst ist mit dem Verlagerungselement gekoppelt. Dadurch ist insbesondere die Montage und/oder die Austauschbarkeit des Haltelements vereinfacht.

Eine Halteeinheit gemäß Anspruch 7 gewährleistet eine ausreichende Länge, um mehrere Hängeadapter gleichzeitig zu halten. Insbesondere beträgt die Längserstreckung der Halteeinheit entlang der Förderrichtung mindestens 0,5 m, insbesondere mindestens 0,75 m, insbesondere mindestens 1,0 m und insbesondere höchstens 5,0 m. Es wurde erkannt, dass es vorteilhaft ist, wenn die Halteeinheit mindestens fünf und insbesondere bis zu zehn Hängeadapter gleichzeitig halten kann.

Eine Ausführung der Hängefördervorrichtung gemäß Anspruch 8 nutzt die Erkenntnis, dass es unproblematisch ist, wenn einige wenige Hängeadapter stromaufwärts des Stoppelements aufgestaut werden. Durch die entlang der Förderrichtung beabstandete Anordnung der Halteeinheit zu dem Stoppelement können mehrere, insbesondere höchstens zehn, insbesondere höchstens fünf, insbesondere höchstens drei, Hängeadapter unmittelbar von dem Stoppelement aufstaut werden. Diesen aufgestauten Hängeadaptern schließt sich dann die Halteeinheit an, in der die Hängeadapter gehalten werden können.

Eine Hängefördervorrichtung gemäß Anspruch 9 ermöglicht eine unkomplizierte und mechanisch robuste Ausführung des Stoppelements. Ein quer zur Förderrichtung verlagerbarer Riegel ist an der Förderschiene insbesondere derart angeordnet, dass er in einen Abschnitt der Förderschiene eingreift, in dem die Hängeadapter gefördert werden. Dieser Bereich ist insbesondere vertikal oberhalb der Tragrollen der Hängeadapter angeordnet. Der Riegel blockiert in einer Stoppposition die weitere Förderung des Hängeadapters. Die Verlagerungsrichtung des Riegels ist quer, insbesondere senkrecht, zur Förderrichtung orientiert und insbesondere horizontal. Es ist auch denkbar, dass die Verlagerungsrichtung vertikal orientiert ist.

Eine Hängefördervorrichtung gemäß Anspruch 10 ermöglicht eine Automatisierung des Betriebs der Hängefördervorrichtung. Eine Stauerkennungseinheit dient zum Erkennen des Aufstauens der Hängeadapter entlang der Förderschiene. Das Aufstauen der Hängeadapter basiert insbesondere auf der Betätigung des Stoppelements. Die Stauerkennungseinheit ist insbesondere stromaufwärts der Halteeinheit an der Förderschiene angeordnet. Es ist aber auch denkbar, dass die Stauerkennungseinheit bezogen auf die Förderrichtung parallel zur Halteeinheit angeordnet ist, also im Bereich der Halteeinheit angeordnet ist.

Eine Stauerkennungseinheit gemäß Anspruch 11 ermöglicht eine intelligente Erfassung eines Aufstauvorgangs. Mit mindestens einem Sensorelement kann die Fördergeschwindigkeit eines bewegten Hängeadapters erfasst werden. Insbesondere weist die Stauerkennungseinheit mehrere Lichtschranken auf, insbesondere ein Lichtgitter. Die Stauerkennungseinheit ist insbesondere derart ausgeführt, dass ein Stoppen der Hängeadapter, also eine reduzierte Fördergeschwindigkeit oder eine signifikante Verlangsamung der Hängeadapter, also Reduzierung der Fördergeschwindigkeit, erfasst werden. Eine signifikante Reduzierung der Fördergeschwindigkeit liegt vor, wenn die erfasste Ist-Fördergeschwindigkeit kleiner ist als die Hälfte einer Soll-Fördergeschwindigkeit. Insbesondere wird ein Aufstauen detektiert, wenn die Fördergeschwindigkeit höchstens 30 % der Ist-Fördergeschwindigkeit beträgt, insbesondere höchstens 20 %, insbesondere höchstens 10 % und insbesondere höchstens 5 %.

Eine Hängefördervorrichtung gemäß Anspruch 12 ermöglicht eine unmittelbare Signalübertragung von der Stauerkennungseinheit zu der Halteeinheit über eine Steuerungseinheit. Eine derartige Hängefördervorrichtung ermöglicht insbesondere einen vollautomatischen Betrieb.

Eine Hängeförderanlage gemäß Anspruch 13 weist im Wesentlichen die Vorteile der Hängefördervorrichtung auf, worauf hiermit verwiesen wird. Die Hängeförderanlage weist mindestens eine und insbesondere mehrere Hängefördervorrichtungen auf. Die Hängeförderanlage umfasst ferner ein Lager für die Waren, insbesondere mindestens eine Beladestation, an der die Waren, insbesondere vereinzelt, in jeweils eine Fördertasche beladen werden, insbesondere mindestens einen Sorter, in dem die Fördertaschen sortiert werden, also ihre Reihenfolge bezüglich des Warenstroms entlang der Förderrichtung verändert wird, mindestens eine Entladestation, an der die Einzelwaren aus den Fördertaschen entnommen werden, mindestens einen Packplatz, an dem die entnommenen Waren in einen Versandbehälter gepackt werden und/oder mindestens einen Warenausgang, an dem die gepackten Versandbehälter an den Warentransport, insbesondere mittels eines Transportfahrzeugs, übergeben werden.

Ein Verfahren gemäß Anspruch 14 weist im Wesentlichen die Vorteile der Hängefördervorrichtung auf, worauf hiermit verwiesen wird. Waren werden, insbesondere vereinzelt, in Fördertaschen mittels der Hängeadapter hängend gefördert entlang einer Förderrichtung einer Förderschiene. Wenn die Hängeadapter in der Förderschiene mittels eines Stellelements gestoppt werden, werden diese aufgestaut. Mittels einer Halteeinheit werden die Hängeadapter, die im Bereich der Halteeinheit angeordnet sind, positionsgetreu gehalten.

Vorteilhaft ist es, wenn das Aufstauen der Hängeadapter mittels einer Stauerkennungseinheit erkannt wird.

Ein Verfahren gemäß Anspruch 15 ist vorteilhaft, weil die Halteeinheit unmittelbar zwischen dem Haltezustand und dem Freigabezustand geschaltet werden kann.

Sowohl die in den Patentansprüchen angegebenen Merkmale als auch die in dem nachfolgenden Ausführungsbeispiel einer erfindungsgemäßen Hängefördervorrichtung angegebenen Merkmale sind jeweils für sich allein oder in Kombination miteinander geeignet, den erfindungsgemäßen Gegenstand weiterzubilden. Die jeweiligen Merkmalskombinationen stellen hinsichtlich der Weiterbildungen des Erfindungsgegenstandes keine Einschränkungen dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine perspektivische Ansicht von oben auf die Hängefördervorrichtung mit an Hängeadaptern geförderten Fördertaschen,
- Fig. 2: eine Seitenansicht der Hängefördervorrichtung gemäß Fig. 1,
- Fig. 3: eine Schnittdarstellung gemäß Schnittlinie III-III in Fig. 2,
- Fig. 4: eine teilgeschnittene Seitenansicht einer Förderschiene der Hängefördervorrichtung gemäß Fig. 1 mit Hängeadaptern.

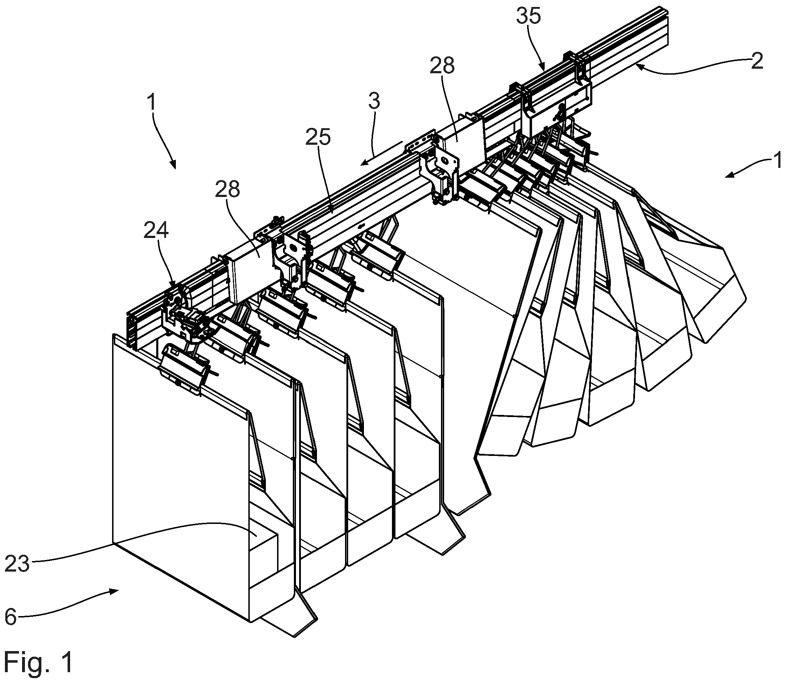

Eine in Fig. 1 bis 4 insgesamt mit 1 gekennzeichnete Hängefördervorrichtung ist Teil einer nicht näher dargestellten Hängeförderanlage, die zum Auslagern und/oder Kommissionieren von Waren aus einem Lager zu Austrägen für den Versand dient.

Die Hängefördervorrichtung 1 umfasst eine Förderschiene 2, die eine Förderrichtung 3 vorgibt. Gemäß dem gezeigten Ausführungsbeispiel verläuft die Förderschiene 2 und damit auch die Förderrichtung 3 linear, insbesondere horizontal. Es versteht sich, dass die Förderschiene 2 zumindest abschnittsweise auch nach oben oder nach unten gegenüber der Horizontalen geneigt und/oder gekrümmt verlaufen kann.

Die Förderschiene 2 ist als Hohlkasten-Profil ausgebildet, in dem eine Antriebskette 4 angeordnet und mittels eines nicht dargestellten Antriebsmittels, insbesondere eines Elektromotors, in der Förderrichtung 3 antreibbar ist. Mittels der Antriebskette 4 sind Haltemittel 5 in der Förderschiene 2 bewegbar angeordnet. Die Haltemittel 5 dienen zum lösbaren Koppeln des Förderbehälters, insbesondere einer flexiblen Fördertasche 6. Jeweils eine Fördertasche 6 kann hängend für den Warentransport an dem Halteelement 5 entlang der Förderrichtung 3 gefördert werden. Die Halteelemente 5 sind Hängeadapter.

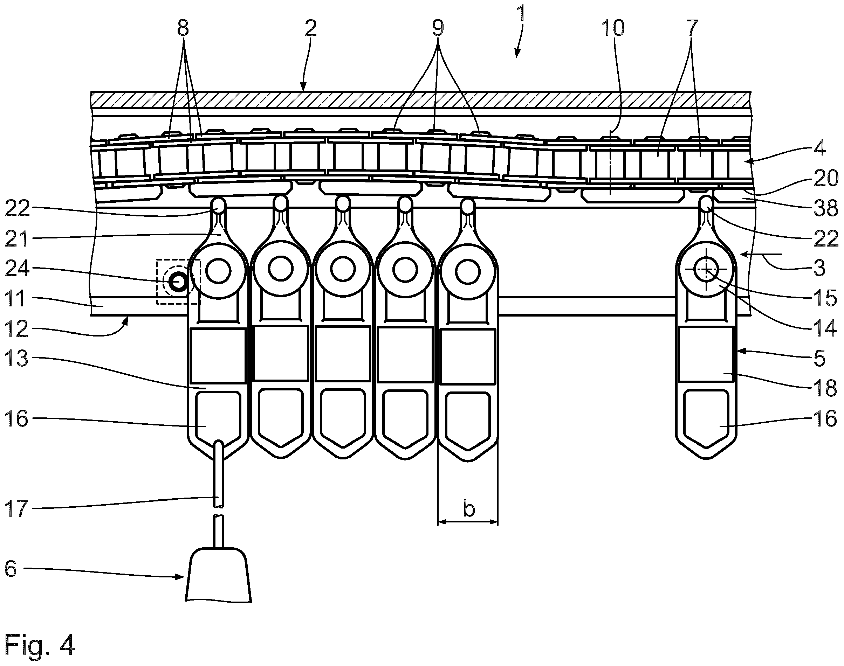

Bei der Antriebskette 4 handelt es sich um eine sogenannte Rollen-Kette, die Rollen 7 aufweist, die in geringem Abstand voneinander mittels Verbindungslaschen 8 und Nieten 9 miteinander verbunden sind. Die Antriebskette 4 weist um vertikale Achsen 10 schwenkbare Gelenke auf. Die Nieten 9 weisen nicht näher dargestellte Bohrungen auf. Die Nieten 9 sind insbesondere Hohlnieten. Die Gelenke der Antriebskette 4 sind mit normalem Spiel ausgeführt, womit auch erreicht wird, dass die Kettenglieder in einem Bogen verlaufen können, wie dies durch den teilweisen gebogen dargestellten Verlauf der Antriebskette 4 in Fig. 4 dargestellt ist.

Die Antriebskette 4 ist in Richtung der Nieten 9, also senkrecht und quer zur Förderrichtung 3 mittels der Verbindungslaschen 8 untergreifende Führungen in der Förderschiene 2 geführt und gehalten.

An der Unterseite der Förderschiene 2 sind zwei aufeinander zu gerichtete Führungsstege 11 ausgebildet, zwischen denen ein sich in Längsrichtung der Förderschiene 2, also in Förderrichtung 3, erstreckender Schlitz 12 ausgebildet ist bzw. begrenzt wird. Durch diesen Schlitz 12 ragt ein flaches Tragteil 13 jedes Hängeadapters 5 nach unten aus der Förderschiene 2 heraus. In seinem oberen Bereich weist der Hängeadapter 5 beiderseits des Tragteils 13 je eine Laufrolle 14 auf, die auch als Tragrolle bezeichnet wird. Die Laufrollen 14 stützen sich jeweils auf einem der beiden Führungsstege 11 ab und sind hierauf in Förderrichtung 3 verschiebbar, insbesondere abrollbar. Es ist also nur ein Paar von Laufrollen 14 vorhanden, die um eine gemeinsame Achse 15 drehbar sind, so dass der gesamte Hängeadapter 5 in der Förderschiene 2 um die Achse 15 pendeln kann. Durch das Pendeln um die Achse 15 ist der Hängeadapter 5 gegenüber der Förderschiene 2 geneigt, also gegenüber einer Normalen auf die Förderschiene 2 in einer durch die Förderrichtung 3 definierten Vertikalebene.

Das Tragteil 13 weist an seinem unteren Ende eine Aufnahmeöffnung 16 auf, in die ein Haken 17 der Fördertasche 6 einhängbar ist. Zwischen der Aufnahmeöffnung 16 und der Unterseite der Förderschiene 2 ist ein Identifizierungselement 18 angeordnet, bei dem es sich um einen Transponder, einen Barcode oder einen QR-Code handeln kann. Das Identifizierungselement 18 verläuft entsprechend der Anordnung des plattenartigen Tragteils 13 in Förderrichtung 3, liegt also mit seiner Hauptfläche offen quer zur Förderrichtung 3, also zur Seite hin. Es ist damit mittels eines Identifizierungsgeräts eindeutig erfassbar, da es nicht in Überdeckung mit anderen Identifizierungselementen 18 kommt.

Eine Fördertasche 6 mit einem zu transportierenden Gegenstand bleibt nach dem Einhängen in den Hängeadapter 5 während des gesamten Fördervorgangs an diesem Hängeadapter 5, ist mit diesem also gleichsam "verheiratet". Der zu transportierende Gegenstand wird also gleichsam über das Identifizierungselement 18 und damit über den Hängeadapter 5 gesteuert. Da wiederum die gesamte Förderung von der Antriebskette 4 her erfolgt, ist es wichtig, dass ein Hängeadapter 5 während der Förderung eine absolut eindeutige Position relativ zu der Antriebskette 4 einnimmt.

Oberhalb der Tragrollen 14 weist der Hängeadapter 5 einen stielartigen Ansatz 21 auf, der einstückig mit dem Tragteil 13 ausgebildet ist. Am oberen Ende dieses stielartigen Ansatzes 21 ist ein Anschlag 22 nach Art eines Querriegels ausgebildet. Der Anschlag 22 bildet ein unteres Kupplungsteil zur mechanischen Kupplung mit der Antriebskette 4.

An der Unterseite 20 der Antriebskette 4 ist an jedem Kettenglied ein oberes Kupplungsteil 38 angeordnet, das insbesondere aus Kunststoff hergestellt ist. Das obere Kupplungsteil 38 ist mit zwei nicht näher dargestellten Zapfen ausgebildet, die in die Bohrungen der hohlen Nieten 9 aufgenommen sind. Insbesondere sind die Zapfen endseitig mit abgeflachten, geschlitzten und gespreizten Enden ausgeführt und bilden einen Schnappverschluss, mit dem die oberen Kupplungsteile 38 fest an der Antriebskette 4 gesichert sind, insbesondere mechanisch verrastet. Die Schnappverschlüsse gestatten eine unkomplizierte Montage der oberen Kupplungsteile 38 an der Antriebskette 4, insbesondere ohne Werkzeug.

Eine konkrete Ausgestaltung und die Funktionsweise des Stauförderers 1, insbesondere der Kupplungsteile 22, 38, ist in DE 10 2010 010 107 A1 beschrieben, worauf hiermit ausdrücklich verwiesen wird.

Aufbau und Funktion der Fördertaschen 6 sind in DE 10 2018 201 675 A1 im Detail erläutert, worauf hiermit ausdrücklich verwiesen wird.

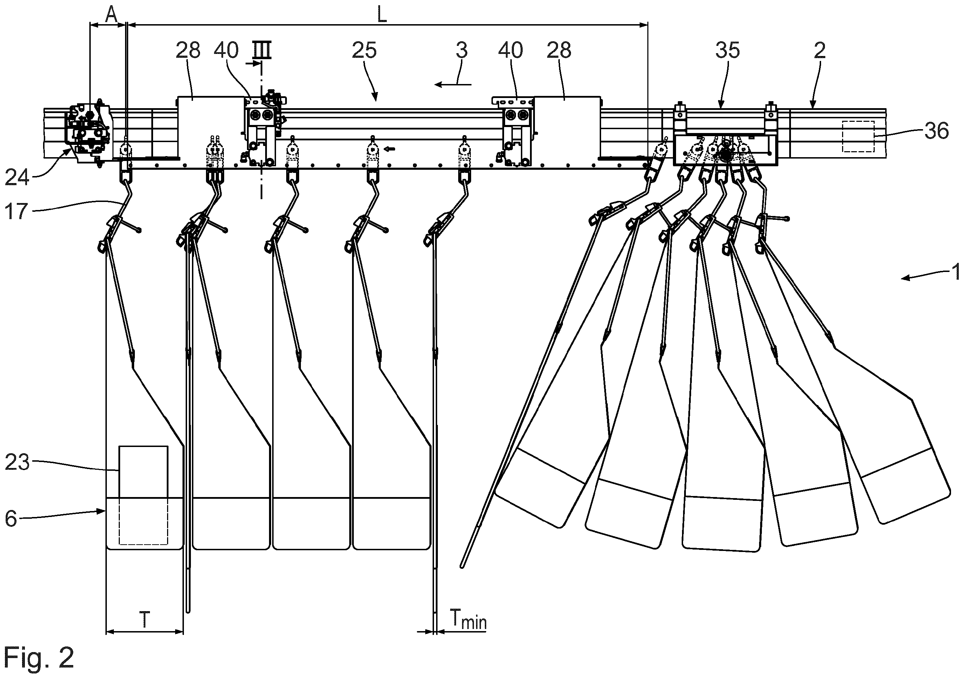

Wesentlich ist, dass die Fördertaschen 6 mit zu transportierenden Waren 23, die in Fig. 2 rein schematisch dargestellt sind, beladen werden können. Die Fördertasche 6 ist derart flexibel ausgeführt, dass sich die äußere Dimension der Fördertasche 6 in Folge der Größe der Waren 23 ergibt. Da die Abmessungen der zu transportierenden Waren 23 sich unterscheiden, ist auch die jeweilige Taschenbreite T, die sich entlang der Förderrichtung 3 erstreckt, für die verschiedenen Fördertaschen 6 unterschiedlich. Rein aus Darstellungsgründen, sind die Taschenbreiten T für die beladenen Fördertaschen 6 identisch dargestellt. In Fig. 2 sind auch leere, also unbeladene, Fördertaschen 6 dargestellt, die eine minimale Taschenbreite Tₘᵢₙ aufweisen.

Die Hängefördervorrichtung 1 umfasst eine Stoppvorrichtung mit einem Stoppelement 24, das an der Förderschiene 2 angeordnet und insbesondere daran befestigt ist. Das Stoppelement 24 ist insbesondere schaltbar ausgeführt, insbesondere als quer zur Förderrichtung 3 verlagerbarer Riegel. Der Riegel ist insbesondere bolzenförmig ausgeführt, kann aber auch andere Geometrien, insbesondere andere Außenkonturen aufweisen. Vorteilhaft ist es, wenn der Riegel stabartig oder stangenförmig ausgeführt ist. Der Riegel ist zwischen einer Durchlassanordnung und einer Stoppanordnung verlagerbar. In der Durchlassanordnung ist der Riegel beabstandet von den Hängeadaptern 5 angeordnet. In der Stoppanordnung ragt der Riegel in das Hohlkastenprofil der Förderschiene 2 vor, insbesondere in einem Bereich oberhalb der Führungsstege 11 und insbesondere in einem Bereich der Tragrollen 14. Der Riegel erstreckt sich insbesondere in einer Ebene senkrecht zur Förderrichtung 3 und insbesondere senkrecht zu einer den Schlitz 12 aufweisenden Vertikalebene.

Stromaufwärts des Stoppelements 24 bezogen auf die Förderrichtung 3 weist die Hängefördervorrichtung 1 eine Halteeinheit 25 auf. Die Halteeinheit 25 ist entlang der Förderrichtung 3 beabstandet zu dem Stoppelement 24 an der Förderschiene 2 angeordnet, insbesondere mit einem Abstand A. Der Abstand A beträgt insbesondere ein Vielfaches der Breite b der Hängeadapter 5, wobei das Vielfache größer ist als 1. Das bedeutet, dass entlang der Förderrichtung 3 zwischen dem Stoppelement 24 und der Halteeinheit 25 mehrere Hängeadapter 5 angeordnet sein können.

Die Halteeinheit 25 weist zwei Halteelemente 26, 27 auf, die gemäß dem gezeigten Ausführungsbeispiel als Halteleisten ausgeführt sind. Das erste Halteelement 26 ist unmittelbar an der Förderschiene 2 befestigt. Das erste Halteelement 26 ist ortsfest bezüglich der Förderschiene 2 angeordnet. Das zweite Halteelement 27 ist an einem rahmenartigen Blechzuschnitt gehalten, der ein Verlagerungselement 28 bildet. Das Verlagerungselement 28 ist um eine Schwenkachse 29 schwenkbar bezüglich der Förderschiene 2 angeordnet. Die Schwenkachse 29 erstreckt sich parallel zur Förderrichtung 3. Die Schwenkachse 29 wird durch eine Schraubverbindung vorgegeben, mittels der das Verlagerungselement 28 an einem Halteblech 40 verbindbar ist. Das Halteblech 40 ist an einer Oberseite der Förderschiene 2 befestigt. Die Schwenkachse 29 verläuft insbesondere oberhalb der Förderschiene 2 und insbesondere seitlich in vertikaler Verlängerung einer Seitenwand des Hohlkastenprofils der Förderschiene 2.

Insbesondere umfasst die Halteeinheit 25 jeweils zwei Verlagerungselemente 28. Wesentlich ist, dass mindestens ein Verlagerungselement 28 vorhanden ist.

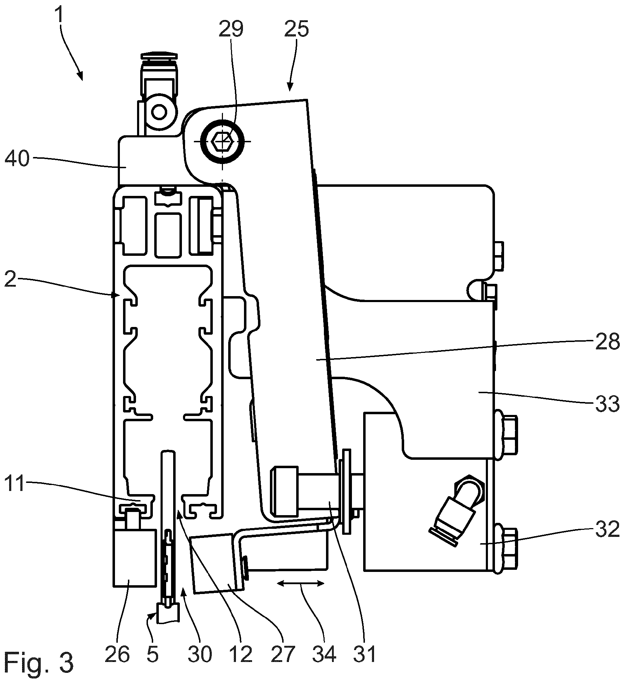

Das zweite Halteelement 27 ist unmittelbar an dem Verlagerungselement 28 befestigt. Eine Verlagerung des Verlagerungselements 28 bewirkt unmittelbar eine Verlagerung des zweiten Halteelements 27. Das zweite Halteelement 27 kann zwischen einer in Fig. 3 gezeigten Freigabeposition, in der das zweite Halteelement 27 beabstandet von den Hängeadaptern 5 angeordnet ist, und einer Halteposition verlagert, insbesondere um die Schwenkachse 29 geschwenkt, werden. In der Halteposition liegt das zweite Halteelement 27 unmittelbar an dem Hängeadapter 5, insbesondere dessen Tragteil 13, an und drückt diesen gegen das gegenüberliegend angeordnete erste Halteelement 26. Die Halteelemente 26, 27 sind jeweils unterhalb der Förderschiene 2, insbesondere benachbart zu dem Schlitz 12 angeordnet. In der Freigabeposition des zweite Halteelements 27 wird zwischen den Halteelementen 26, 27 ein Freigabeschlitz 30 gebildet, der fluchtend zu dem Schlitz 12 angeordnet ist und sich entlang der Förderrichtung 3 erstreckt. Durch den Freigabeschlitz 30 ist das Tragteil 13 des Hängeadapters 5 geführt. In der Freigabeposition können die Hängeadapter 5 berührungsfrei entlang der Halteeinheit 25 gefördert werden.

An dem Verlagerungselement 28 ist unmittelbar ein Stellelement 31 mechanisch gekoppelt. Insbesondere ist das Stellelement 31 ein linear verlagerbarer Hubzylinder, der insbesondere pneumatisch mittels eines Stellantriebs 32 betätigbar ist. Mittels des Stellelements 31 ist das Verlagerungselement 28 und damit das zweite Halteelement 27 schaltbar ausgeführt. Insgesamt ist die Halteeinheit 25 schaltbar, nämlich zwischen dem in Fig. 3 gezeigten Freigabezustand, in dem sich das zweite Halteelement 27 in der Freigabeposition befindet und einem Haltezustand, in dem sich das zweite Halteelement 27 in der Halteposition befindet. Das Stellelement 31 und der Stellantrieb 32 sind mittels einer separaten Befestigung 33 an der Förderschiene 2 gehalten. Insbesondere ist die Befestigung 33 unabhängig von dem Verlagerungselement 28. Die Befestigung 33 ist ortsfest.

Die Verlagerungsrichtung 34 des Stellelements 31 erstreckt sich quer und insbesondere senkrecht zu der Förderrichtung 3, insbesondere senkrecht zu einer die Förderrichtung 3 enthaltenden Vertikalebene.

Die Haltelemente 26, 27 weisen jeweils ein Haltematerial auf, das das Halten der Hängeadapter 5, insbesondere das kraftschlüssige Klemmen der Hängeadapter 5 verbessert. Als Haltematerial dient insbesondere eine Kunststoffleiste, insbesondere eine Gummileiste.

Alternativ können das erste Halteelement 26 und insbesondere das zweite Halteelement 27 mit mehreren, entlang der Förderrichtung 3 nebeneinander angeordneten, beweglichen, insbesondere federgelagerten Stiften ausgeführt sein, die entlang der Verlagerungsrichtung 34 des Stellantriebs 32 beweglich sind. Die Stifte können in einen Zwischenraum zwischen zwei benachbarten Hängeadaptern 5 eingreifen. Wenn die Stifte im Bereich eines Hängeadapters 5 angeordnet sind, kommen sie zum Anliegen an den Hängeadapter 5 und führen insbesondere nicht zu einer Klemmung des Hängeadapters 5 selbst. Das Halten der Hängeadapter 5 wird insbesondere durch die in den Zwischenräumen zwischen den Hängeadaptern 5 eingreifenden Stiften bewerkstelligt. In diesem Fall ist es insbesondere ausreichend, wenn die Halteeinheit 25 nur ein einziges Halteelement, nämlich das zweite Halteelement 27 aufweist. In diesem Fall ist das erste Halteelement 26 entbehrlich.

Die Halteeinheit 25 weist eine Längserstreckung L auf, die gemäß dem gezeigten Ausführungsbeispiel etwa 1,0 m beträgt. Die Längserstreckung L ist entlang der Förderrichtung 3 orientiert. Die Längserstreckung L ergibt sich insbesondere aus der Längserstreckung der Haltelemente 26, 27.

Die Hängefördervorrichtung 1 umfasst eine Stauerkennungseinheit 35, die gemäß dem gezeigten Ausführungsbeispiel stromaufwärts der Halteeinheit 25 an der Förderschiene 2 angeordnet ist. Die Stauerkennungseinheit 35 dient zum Erkennen eines Aufstauens der Hängeadapter 5 entlang der Förderschiene 2. Die Stauerkennungseinheit 35 umfasst mindestens ein nicht näher dargestelltes Sensorelement, insbesondere mehrere Sensorelemente.

Insbesondere ist die Stauerkennungseinheit 35 als Lichtgitter ausgeführt. Die Stauerkennungseinheit 35 ist insbesondere derart ausgeführt, dass sich die Ist-Fördergeschwindigkeit, mit der die Hängeadapter 5 entlang der Förderschiene 2 gefördert werden, erfassen kann.

Die Hängefördervorrichtung 1 umfasst eine Steuerungseinheit 36, die in Fig. 2 rein schematisch dargestellt ist. Die Steuerungseinheit 36 steht mit der Stauerkennungseinheit 35 und mit der Halteeinheit 25 und insbesondere mit dem Stoppelement 24 in Signalverbindung. Die Signalverbindung kann kabellos oder kabelgebunden erfolgen. Die Steuerungseinheit 36 kann in eine übergeordnete Anlagensteuerung der Hängeförderanlage integriert sein.

Nachfolgend wird ein Verfahren zum Fördern von Waren mit der Hängefördervorrichtung 1 näher erläutert.

Die Fördertaschen 6, die zumindest teilweise mit jeweils einer Ware 23 beladen sind, werden in der Förderschiene 2 entlang der Förderrichtung 3 gefördert. Die Förderung erfolgt mittels eines Antriebsmittels, wobei insbesondere die Antriebskette 4 gemäß der DE 10 2010 010 107 A1 ausgeführt sein kann. Eine derartige Hängefördervorrichtung 1 wird auch als Stauförderer bezeichnet. Die Antriebskette 4 ermöglicht die Förderung der Hängeadapter 5. Bei einer Blockade der Hängeadapter 5, insbesondere bei einem gezielten Stoppen der Hängeadapter 5 kann die Antriebskette 4 gezielt von den Hängeadaptern 5, insbesondere den Anschlägen 22 mechanisch entkoppelt werden.

Wenn in der Hängefördervorrichtung 1 das Stoppelement 24 aktiviert wird, wird der Riegel in die Stoppposition verlagert. Dadurch werden die Hängeadapter 5 von dem Stoppelement 24 gestoppt und hinsichtlich einer weiteren Förderung entlang der Förderrichtung 3 gehindert.

Durch das Betätigen des Stoppelements 24 wird der unmittelbar an dem Stoppelement 24 anliegende Hängeadapter 5 gestoppt. Die nachfolgenden Hängeadapter 5 mit den daran befestigten Fördertaschen 6 kommen zum Anliegen an die jeweils davor angeordnete Fördertasche 6 bzw. den davor angeordneten Hängeadapter 5. Die nachfolgenden Hängeadapter 5 mit Fördertaschen 6 werden durch den jeweils davor liegenden Hängeadapter 5 mit Fördertasche 6 aufgestaut. In Folge des zunehmenden Staudrucks können die Hängeadapter 5 aufeinander auflaufen und die Fördertaschen 6 werden um die Achse 15, um die die Hängeadapter 5 pendelnd in der Förderschiene 2 angeordnet sind nach oben geschwenkt, gemäß Fig. 2 im Uhrzeigersinn.

Die Halteeinheit 25 befindet sich zu diesem Zeitpunkt in dem Freigabezustand. Das bedeutet, dass die Hängeadapter 5 mit den daran angehängten Fördertaschen 6 entlang der Förderrichtung 3 durch die Halteeinheit 25 gefördert werden können. Durch nachfolgende Hängeadapter 5 bildet sich eine aufgestaute Anordnung, wie dies in Fig. 2 oder 4 dargestellt ist.

Wenn die Stauerkennungseinheit 35 ein Aufstauen der Hängeadapter 5 erkennt, insbesondere weil die Ist-Fördergeschwindigkeit der Hängeadapter 5 im Bereich der Stauerkennungseinheit 35 deutlich abweicht von einer Soll-Fördergeschwindigkeit, gibt die Stauerkennungseinheit 35 ein Erkennungssignal aus, dass an die Steuerungseinheit 36 übermittelt wird. Die Steuerungseinheit 36 übermittelt ein entsprechendes Stellsignal an den Stellantrieb 32, der eine Antriebsbewegung auf das Stellelement 31 entlang der Verlagerungsrichtung 34 ausübt, so dass das Verlagerungselement mit dem daran gehaltenen zweite Halteelement 27 von der Freigabeposition in die Halteposition verlagert wird. Dadurch werden alle Hängeadapter 5, die im Bereich der Halteeinheit 25 angeordnet sind, in ihrer Position gehalten, also insbesondere mit zueinander beabstandet angeordneten Hängeadaptern 5.

Mit der Hängefördervorrichtung 1, insbesondere mit der Halteeinheit 25, ist es ermöglicht, die jeweilige Position der Hängeadapter 5 mit den daran hängenden Fördertaschen 6 zu konservieren, insbesondere zu einem Zeitpunkt, zu dem kein oder allenfalls nur ein geringer Staudruck auf diese Fördertasche 6 wirkt. Dadurch wird das Risiko einer unbeabsichtigten Auslenkung der Fördertaschen 6 und/oder eine unbeabsichtigte Krafteinwirkung auf die einzelnen Hängeadapter 5 aufgrund nachfolgender Hängeadapter 5 vermieden oder reduziert.

Wenn sich die Halteeinheit 25 in dem Haltezustand befindet, ist eine Förderung von Hängeadaptern 5 entlang der Förderrichtung 3 in die Halteeinheit 25 verhindert. Das stromaufwärts angeordnete Ende der Halteeinheit 25, das als dem Stoppelement 24 abgewendet angeordnet ist, dient als Stoppelement 24 zum Stoppen der Hängeadapter 5 vor der Einfahrt in die Halteeinheit 25. Es ist auch möglich, ein separates Stoppelement 24 in diesem Bereich anzuordnen, um die Halteeinheit 25 und insbesondere die Haltelemente 26, 27 vor mechanischen Beeinträchtigungen zu schützen.

Die Stauerkennungseinheit 35 kann entlang der Förderrichtung 3 auch an einer anderen Stelle an der Hängefördervorrichtung 1 angeordnet sein, insbesondere im Bereich der Halteeinheit 25, also entlang der Längserstreckung L. Es auch möglich, die Stauerkennungseinheit 35 mit Sensoren auszuführen, die beispielsweise den Staudruck auf die Hängeadapter 5 im Bereich des Stoppelements 24 erfassen, insbesondere als Kraftmesssensoren. Zusätzlich oder alternativ kann die Stauerkennungseinheit 35 auch optische Sensoren aufweisen, die den Füllzustand der Halteeinheit 25 mit Hängeadaptern 5 erkennen.

Wenn das Stoppelement 24 zurück in die Durchlassposition verlagert und damit die Förderung der Fördertaschen 6 fortgesetzt wird, wird auch die Halteeinheit 25 geöffnet, also in den Freigabezustand geschaltet und damit eine weitere Förderung der Hängeadapter 5 im Bereich der Halteeinheit 25 ermöglicht.

## Patentansprüche

1. Hängefördervorrichtung umfassend
a. eine eine Förderrichtung (3) vorgebende Förderschiene (2),
b. mehrere in der Förderschiene (2) in Förderrichtung (3) bewegbare Hängeadapter (5),
c. ein an der Förderschiene (2) angeordnetes Stoppelement (24) zum Stoppen der Hängeadapter (5) in der Förderschiene (2),
d. eine stromaufwärts des Stoppelements (24) angeordnete Halteeinheit (25) zum Halten mindestens eines im Bereich der Halteeinheit (25) angeordneten Hängeadapters (5).

2. Hängefördervorrichtung gemäß Anspruch 1, **dadurch gekennzeichnet, dass** die Halteeinheit (25) schaltbar ausgeführt ist.

3. Hängefördervorrichtung gemäß einem der vorstehenden Ansprüche, **dadurch gekennzeichnet, dass** die Halteeinheit (25) ein erstes Halteelement (26) und ein zweites Halteelement (27) aufweist, das beweglich bezüglich des ersten Halteelements (26) ausgeführt ist.

4. Hängefördervorrichtung gemäß Anspruch 3, **dadurch gekennzeichnet, dass** das erste Halteelement (26) und/oder das zweite Halteelement (27) ein Haltematerial aufweisen.

5. Hängefördervorrichtung gemäß Anspruch 3 oder 4, **dadurch gekennzeichnet, dass** die Halteeinheit (25) mindestens ein schaltbares Stellelement (31) aufweist, das mit dem zweiten Halteelement (27) gekoppelt ist.

6. Hängefördervorrichtung gemäß einem der Ansprüche 3 bis 5, **dadurch gekennzeichnet, dass** das zweite Halteelement (27) an einem Verlagerungselement (28) gehalten ist, das insbesondere unmittelbar mit dem mindestens einen Stellelement (27) gekoppelt ist.

7. Hängefördervorrichtung gemäß einem der vorstehenden Ansprüche, **dadurch gekennzeichnet, dass** die Halteeinheit (25), insbesondere die Halteelemente (26, 27), eine Längserstreckung (L) entlang der Förderrichtung (3) von mindestens 0,3 m aufweist.

8. Hängefördervorrichtung gemäß einem der vorstehenden Ansprüche, **dadurch gekennzeichnet, dass** die Halteeinheit (25) entlang der Förderrichtung (3) beabstandet zu dem Stoppelement (24) angeordnet ist.

9. Hängefördervorrichtung gemäß einem der vorstehenden Ansprüche, **dadurch gekennzeichnet, dass** das Stoppelement (24) als quer, insbesondere senkrecht zur Förderrichtung (3) verlagerbarer Riegel ausgeführt ist, der insbesondere derart an der Förderschiene (2) angeordnet ist, dass der Riegel den zu stoppenden Hängeadapter (5) in einem vertikal oberhalb von Tragrollen (14) des Hängeadapters (5) angeordneten Abschnitt stoppt.

10. Hängefördervorrichtung gemäß einem der vorstehenden Ansprüche, **gekennzeichnet durch** eine, insbesondere stromaufwärts der Halteeinheit (25) angeordnete, Stauerkennungseinheit (35) zum Erkennen eines Aufstauens der Hängeadapter (5) entlang der Förderrichtung (3).

11. Hängefördervorrichtung gemäß Anspruch 10, **dadurch gekennzeichnet, dass** die Stauerkennungseinheit (35) mindestens ein Sensorelement aufweist, das zur Erfassung der Ist-Fördergeschwindigkeit eines, insbesondere entlang der Förderrichtung (3) an der Stauerkennungseinheit (35), bewegten Hängeadapters (5) dient.

12. Hängefördervorrichtung gemäß Anspruch 10 oder 11, **gekennzeichnet durch** eine Steuerungseinheit (36), die mit der Stauerkennungseinheit (35) und mit der Halteeinheit (25) in Signalverbindung steht.

13. Hängeförderanlage mit mindestens einer Hängefördervorrichtung (1) gemäß einem der vorstehenden Ansprüche.

14. Verfahren umfassend die Verfahrensschritte
- hängendes Fördern von Waren in Fördertaschen (6) mittels Hängeadaptern (5) in einer eine Förderrichtung (3) vorgebenden Förderschiene (2),
- Stoppen der Hängeadapter (5) in der Förderschiene (2) mittels eines an der Förderschiene (2) angeordneten Stoppelements (24),
- Halten von im Bereich einer stromaufwärts des Stoppelements (24) angeordneten Hängeadaptern (5) mittels der Halteeinheit (25).

15. Verfahren gemäß Anspruch 14, **dadurch gekennzeichnet, dass** das Halten gesteuert erfolgt, insbesondere mittels einer Steuerungseinheit (36), wobei insbesondere ein Erkennen eines Aufstauens der Hängeadapter (5) mittels einer Stauerkennungseinheit (35) erfolgt und insbesondere das Steuern in Abhängigkeit des Aufstauens der Hängeadapter (5) erfolgt.
